# EUROPEAN PATENT SPECIFICATION

(11) **EP 2 949 726 B1**
(45) Date of publication and mention of the grant of the patent: **08.01.2020**
(21) Application number: 15169176.3
(22) Date of filing: 26.05.2015
(51) Int. Cl.: C09K 11/08, B41M 3/14

(54) **COMPOSITION OF FLUOROPHORES AND USE THEREOF**
ZUSAMMENSETZUNG VON FLUORPOHOREN UND VERWENDUNG DAVON
COMPOSITION DE FLUOROPHORES ET SON UTILISATION

(30) Priority: 26.05.2014 IT BO20140308
(43) Date of publication of application: 02.12.2015
(73) Proprietor: Cabro S.p.A., 52100 Arezzo (IT)
(72) Inventor: Giannini, Giacomo, 52100 Arezzo (IT); Ghini, Giacomo, 52100 Arezzo (IT)
(74) Representative: Mangini, Simone

(56) References cited:
- WO-A1-03/053980
- WO-A1-2011/082794
- US-A- 4 833 311
- US-A1- 2012 313 747
- US-A1- 2013 181 144
- G. CAROTENUTO ET AL: "Fluorescent Thiol-Derivatized Gold Clusters Embedded in Polymers", ADVANCES IN MATERIALS SCIENCE AND ENGINEERING, vol. 33, no. 1, 1 January 2013 (2013-01-01), pages 3-6, XP055162493, ISSN: 1687-8434, DOI: 10.1039/b310898h

## Description

### TECHNICAL FIELD

The present invention relates to a composition and a use of said composition.

### BACKGROUND TO THE INVENTION

Systems for anti-counterfeiting and product traceability are becoming increasingly complex in an attempt to limit the impact of imitators, who adopt solutions increasingly similar to those of the original manufacturers.

Nowadays, the market requires an increasing variety of solutions and increasingly advanced systems which limit, as far as possible, the marketing of non-original products and goods. The tracing of commercial goods from their production via the raw materials to their presence on the market is also an increasingly important requirement. The systems proposed so far, however, have not proved to be sufficiently easy to use, simple to apply and effective in their response.

US4833311 (published in 1989) discloses a system of chelates of several rare earths for anti-counterfeiting purposes. More precisely, the system is based on thermally assisted energy-transfer chelates - see in particular lines 21-27 of column 1. This phenomenon entails a transfer of energy from a first to a second rare earth as a function of the temperature. In other words, US4833311 does not describe if and how the fluorescence of the single compounds (rare earth chelates) is modified, but the fact that, by varying the temperature, the interactions between the compounds are modified and consequently the emission wavelength is varied (lines 38-42 of column 5). These effects are detected in particular at temperatures well below 0°C (77°K - line 20 column 5; 4°K - line 41 of column 5).

WO03053980 (published in 2003) discloses (lines 11-15 of page 7) a system similar to the previous one in which compounds of different rare earths (but not necessarily different compounds) interact with one another so as to modify their emissions according to the temperature. Also in this case, cooling is performed in order to observe changes in emission with respect to the ambient temperature (lines 15-18 of page 7) .

US20120313747 (published in 2012) discloses an authentication method which involves the use of two optically active compounds. This document does not provide details of the conditions in which said compounds do not emit.

The purpose of the present invention is to provide a composition and a use of said composition which overcome, at least partially, the drawbacks of the known art and are, at the same time, easy and inexpensive to produce.

### SUMMARY

According to the present invention a composition and a use of said composition are provided according to the following independent claims and, preferably, any one of the claims depending directly or indirectly on the independent claims.

### DETAILED DISCLOSURE

In accordance with an aspect of the present invention, a composition is provided comprising at least one first fluorophore, which has a first quenching temperature, and at least one second fluorophore, which has a second quenching temperature that differs from the first quenching temperature by at least 5°C.

In use, the above temperature difference makes it simpler to discern between the two quenching temperatures. In practice, if the quenching temperatures were too close, it would not be possible to experimentally observe two changes of emission (colour). The two changes of emission (colour) are particularly complex to reproduce for anyone wishing to manufacture a counterfeit product.

By fluorophore (i.e. a substance that emits radiation by means of a fluorescence mechanism) it is meant a luminophore which decays from a state of excitation, in which it remains (persists) for a period of time in the order of nanoseconds (10⁻⁹ seconds) (in particular, for less than 10 nanoseconds), said lifetime of the excited state, after being excited (in particular, by an incident radiation able to bring the fluorophore from a base state to an excited state) emitting electromagnetic radiations (in particular, in the visible spectrum).

By incident radiation it is meant an electromagnetic radiation that strikes the fluorophore or the composition.

By quenching temperature of a fluorophore it is meant the minimum temperature at which that fluorophore stops emitting, despite being in the presence of the cause of excitation.

It should be noted that, in particular, the phenomenon of quenching is (normally) reversible. In other words, once the fluorophore is brought back below the quenching temperature, said fluorophore begins to emit again.

For further information on the phenomenon of quenching, see "Principles of fluorescence spectroscopy" second edition, Joseph R. Lakowiez, Klumer Academic/Plenum Publishes, 1999 p. 238-264; *"*Molecular Fluorescence: Principles and Applications", Bernard Valeur, Wiley-VCH Verlag GmbH, 2001, Chapter 3, p. 48.

At least the first quenching temperature ranges from 0°C to 300°C. Advantageously, the first quenching temperature ranges from 0°C to 200°C. In particular, the first quenching temperature ranges from 0°C to 150°C.

"Synthesis and characterization of a novel high luminescent gold-2-mercapto-1-methyl-imidazole complex" (Conte et al; Luminescence, 2011, Volume 26, Issue 6, pages 506-509) describes the synthesis of a fluorophore as defined above.

In the article "Fluorescent thiol-derivatized gold clusters embedded in polymers" (G. Carotenuto et al, Advances in Materials Science and Engineering, Volume 2013, Article ID 548284) the following fluorophores are described: AuSC14H29 with red emission in the visible spectrum, absorption peak in the UVC and quenching temperature of 85°C; AuSC14H29/AgTDM with orange emission in the visible spectrum, absorption both in the UVA and UVC and quenching temperature of 85°C; AuMMI (AuSC4H5N2) with green emission in the visible spectrum, absorption peak in the UVA and quenching temperature of 130°C.

According to specific embodiments, the first and the second fluorophore are chosen, each independently of the other, in the group consisting of: AuSC14H29, AuSC14H29/AgTDM, AuMMI. Even more precisely, the first fluorophore is AuSC14H29 and the second fluorophore is AuMMI.

A further example of commercial fluorophore that can be used for the present invention is TL-0002 by Tailorlux GmbH, Fraunhoferstrasse 1, D-48161 Münster/Germany.

Advantageously, the first and the second quenching temperature range from 0°C (in particular, from 25°C) to 300°C. Advantageously, the first and the second quenching temperature range from 0°C (in particular, from 25°C) to 200°C. More precisely, the first and the second quenching temperature range from 0°C (in particular, from 25°C) to 150°C.

Advantageously, the first and the second quenching temperature are at least 20°C (in particular, at least 25°C). In use, this means that in order to observe the emission modifications (colour) due to the temperature, heating and not cooling is required. Heating, as compared to cooling, is much simpler and easier in technical and practical terms.

Advantageously, the first and the second quenching temperature are lower than 100°C. In this way, in practice non-destructive tests can be performed for the majority of materials.

According to specific embodiments (therefore), the first and the second quenching temperature range from 20°C (in particular, from 25°C) to 100°C.

Characteristics of this type mean that the composition is particularly useful for the identification of products, making it possible to vary the response of the composition to temperatures that can be easily reached and which normally do not damage the objects on which the composition is applied.

According to some embodiments, the first and the second fluorophore absorb (in particular, are brought to an excited state by) incident UV radiations (with wavelength measuring approximately 400-100 nm). In particular, the first and the second fluorophore absorb (in particular, are brought to an excited state by) incident radiations chosen in the group consisting of: UVA radiations (with wavelength measuring approximately 400-315nm), UVB radiations (with wavelength measuring approximately 315-280nm), UVC radiation (with wavelength measuring approximately 280-100nm). According to some variations, the first and the second fluorophore absorb (in particular, are brought to an excited state by) incident radiations chosen in the group consisting of: UVA radiations (with wavelength measuring approximately 400-315nm), UVC radiation (with wavelength measuring approximately 280-100nm).

Advantageously, the first and the second fluorophore are adapted to emit (by decay from the excited state reached following absorption) at wavelengths (in particular, with peaks) different from one another, in particular of at least 5nm (more precisely, at least 10nm; even more precisely, at least 20nm) between the peaks of emission.

Advantageously, the first fluorophore are adapted to emit at least at a wavelength (with peak) in the visible field (with wavelength measuring approximately 380-750nm). More precisely, the first and the second fluorophore each emit at least at a respective wavelength (with peak) in the visible field (with wavelength measuring approximately 380-750nm).

In particular, the emissions of the first and second fluorophore are visible (and distinguishable from each other) to the naked eye. More precisely, the first and the second fluorophore emit different colours (distinguishable to the naked eye).

According to some embodiments, the composition comprises a third fluorophore. In some cases, the third fluorophore has a third quenching temperature that differs from the first and the second quenching temperature by at least 5°C. Alternatively, the third fluorophore is not thermochromic and therefore substantially does not modify its fluorescence behaviour as a function of the temperature.

In particular, the third quenching temperature ranges from 0°C (in particular, from 25°C) to 300°C. Advantageously, the third quenching temperature ranges from 0°C (in particular, from 25°C) to 200°C. In particular, the third quenching temperature ranges from 0°C (in particular, from 25°C) to 150°C.

Advantageously, the third quenching temperature is at least 20°C (in particular, at least 25°C). Advantageously, the third quenching temperature is lower than 100°C.

According to specific embodiments (therefore), the third quenching temperature ranges from 20°C (in particular, from 25°C) to 100°C.

According to some embodiments, the third fluorophore absorbs (in particular, is brought to an excited state by) incident UV radiations (with wavelength measuring approximately 400-100 nm). In particular, the third fluorophore absorbs (in particular, is brought to an excited state by) incident radiations chosen in the group consisting of: UVA radiations (with wavelength measuring approximately 400-315nm), UVC radiation (with wavelength measuring approximately 280-100nm). In some cases, the third fluorophore absorbs (in particular, is brought to an excited state by) incident radiations chosen in the group consisting of: UVA radiations (with wavelength measuring approximately 400-315nm), UVC radiation (with wavelength measuring approximately 280-100nm).

Advantageously, the third fluorophore is adapted to emit at least at a wavelength (with peak) in the visible field (with wavelength measuring approximately 380-750nm).

Advantageously, the third fluorophore is adapted to emit at a wavelength that differs from the first and second fluorophore, in particular by at least 5 nm between the peaks of emission.

According to specific embodiments, the third fluorophore is chosen in the group consisting of: AuSC14H29, AuSC14H29/AgTDM, AuMMI.

In particular, the emissions of the first, second and third fluorophore are visible (and distinguishable from one another) to the naked eye. More precisely, the first, the second and the third fluorophore emit different colours (distinguishable to the naked eye).

In accordance with a further aspect of the present invention, a use of the composition according to the first aspect of the present invention is provided for the identification (more precisely, to verify the authenticity) of an object. In particular, the mentioned use is for anti-counterfeiting purposes.

In particular, the use comprises an application step, during which the composition is applied to the object; an irradiation step, which is (at least partially) subsequent to the application step and during which the composition (in particular, the object) is irradiated at least at a wavelength for the absorption of at least the first fluorophore; and a detection step, (which is associated with a relative irradiation step and) during which emissions coming by fluorescence from the composition (in particular, from the object), irradiated according to the irradiation step, are detected and the wavelength (in particular, the peak) of said emissions (in the visible spectrum) is determined.

Advantageously, during the irradiation step, the composition is irradiated at least at a wavelength for the absorption of the second fluorophore. According to some embodiments, during the irradiation step, the composition is irradiated at least at a wavelength for the absorption of the third fluorophore.

In particular, during the irradiation step, the composition is irradiated by means of incident radiations at wavelengths for the absorption of the first, second and third fluorophore.

The irradiation and detection steps are performed (repeated) at a first analysis temperature, which is from 0°C (in particular from 25°C) to 300°C (in particular from 0°C to 200°C) and is lower than the first quenching temperature, and than at least a second analysis temperature which is from 0°C (in particular from 25°C) to 300°C (in particular from 0°C to 200°C) and is higher than the first quenching temperature.

Advantageously, the first and the second analysis temperature are at least (each independently of the other) 20°C (in particular, at least 25°C). Advantageously, the first and the second analysis temperature are lower than 100°C.

According to specific embodiments (therefore), the first and the second analysis temperature are from 20°C (in particular, from 25°C) to 100°C.

According to some embodiments, the irradiation and detection steps are repeated also at least at a third analysis temperature higher than the second quenching temperature. The second analysis temperature being lower than the second quenching temperature.

According to some embodiments, the use also comprises a comparison step, during which the data recorded during the detection step (at the analysis temperatures) are compared with reference data. More precisely, characteristics of the emissions detected during the detection step (at the analysis temperatures) are compared with reference characteristics.

In some cases, the cited characteristics are one or more wavelengths of the emissions. In these cases therefore, the wavelengths of the emissions detected are compared with reference wavelengths.

In some cases, the cited characteristics are the colours of the emissions. In these cases, therefore, the colours of the emissions detected are compared with reference colours.

According to some variations, the cited characteristics are the intensities of the emissions at certain wavelengths.

According to some variations, the cited characteristics are the spectral form of the emissions at certain UV excitation frequencies.

Advantageously, during the detection step, the emissions in the visible field (with wavelength measuring approximately 380-750nm) are detected.

According to some embodiments (during the irradiation step), the composition (in particular the object) is irradiated by means of UV radiations. In particular, the UV radiations are chosen in the group consisting of: UVA radiations (400-315nm), UVB radiations (315-280nm), UVC radiation (280-100nm) and a combination thereof.

In some cases, during the irradiation step, the composition is irradiated by at least two different light sources (UVA, UVB, UVC) .

Advantageously, the irradiation and detection steps are protracted continuously, while the temperature is varied between the first analysis temperature and the second analysis temperature (according to some embodiments, between the first and the third analysis temperature). In particular, the irradiation and detection steps are protracted continuously, while the temperature is varied between the first analysis temperature and the third analysis temperature.

In relation to the above description and to how the invention can be exploited, it should be noted that the fluorophores can be quenched in sequence by raising the temperature. The colour emitted by the composition (or the emission intensity) can be varied, ceasing (or reducing the intensity of) the light emission of the single fluorophore which at that moment has exceeded its quenching value.

Therefore, below the lowest quenching threshold (temperature) of the fluorophores that compose the mixture, the latter will emit radiations (in particular, a colour) corresponding to the sum of the radiations (colours) emitted by the single fluorophores.

By heating continuously, the value at which the fluorophore with the lowest quenching temperature stops emitting will be reached. In this way, according to some embodiments, the light emission in the visible spectrum will change colour (frequency) and will be the sum of the emissions in the visible spectrum of the other fluorophores, present in the composition, which have still not reached the thermal quenching point. By continuing to raise the temperature, the quenching temperature of the second fluorophore will be reached. As previously, its light contribution will cease and the composition will emit only the visible colouring of the fluorophore/s present in the composition, which have not yet reached the quenching temperature. Proceeding in this way up to the quenching temperature of the last fluorophore and raising the temperature again, a value will be reached beyond which there will no longer be any light emission in the visible spectrum. In these cases, therefore, the composition will take on as many different colourings, increasing the temperature up to the maximum quenching temperature, as are the fluorophores mixed in the composition, plus a non-coloured combination above the highest maximum quenching temperature of those that characterise the fluorophores of the mixture. In other words, the fluorophores which, when the temperature increases, reach the quenching temperature will be quenched and their colorimetric contribution to the mixture will cease. The fluorophores that have higher quenching temperatures, which are not reached by the heating, will continue to emit and the emission of the composition at the maximum temperature will be the result of the emission of the fluorophores with quenching temperatures not reached.

Allowing the composition to cool, each time the quenching temperature of each single fluorophore is reached, said composition will once again have the light contribution of the fluorophore in question.

Using fluorophores with different quenching points, compositions can be obtained which have a colorimetric sequence linked to the increase in temperature. This sequence allows a code to be obtained which permits identification of the type of composition and therefore the type of product on which it is deposited.

Further characteristics of the present invention will emerge from the following description of some merely illustrative and non-limiting examples.

### Example 1

It is assumed that the following fluorophores are used (the quenching temperatures are increasing from T1 to T6): Fluorophores of type 1 which have marked emission if excited with ultraviolet UVA frequencies.
- Fluorophore with emission in the visible red spectrum if excited with UVA and low emission if excited with UVC. Quenching temperature T1.
- Fluorophore with emission in the visible blue spectrum if excited with UVA and low emission if excited with UVC. Quenching temperature T2.

- Fluorophore with emission in the visible green spectrum if excited with UVA and low emission if excited with UVC. Quenching temperature T3. Fluorophores of type 2 which have marked emission if excited with ultraviolet UVC frequencies.
- Fluorophore with emission in the visible blue spectrum if excited with UVC and low emission if excited with UVA. Quenching temperature T4.
- Fluorophore with emission in the visible green spectrum if excited with UVC and low emission if excited with UVA. Quenching temperature T5.
- Fluorophore with emission in the visible red spectrum if excited with UVC and low emission if excited with UVA. Quenching temperature T6.

All the fluorophores of type 1 are mixed together with those of type 2 in appropriate ratios. If we mix the type 1 fluorophores we obtain emission of white light if excited with UVA in the ultraviolet spectrum. If we do the same with the type 2 fluorophores we always obtain emission of white light if excited with UVC in the ultraviolet spectrum. If we excite in the ultraviolet spectrum with UVA and begin to heat, we will obtain emission of **white** in the visible spectrum at **ambient T,** white minus red, i.e. **sky blue at T1,** sky blue minus blue, i.e. **green at T2** and **no emission at T3.** If we wait for the composition to cool and we excite in the ultraviolet spectrum with UVC and begin to heat, we will observe the following. The composition will emit **white** light in the visible spectrum if excited at **ambient temperature,** white minus blue, i.e. **yellow at T4,** yellow minus green, i.e. **red at T5** and **no emission at T6.**

The above colours can be combined obtaining different colour sequences as a function of the sequence of operations performed. For example we can have the following codes in relation to the following reading procedures.

Excitation of the mixture of fluorophores of the example cited by means of UVA. Gradual thermal heating from ambient T to T3 and reading of the colours. The following sequence is obtained: white, sky blue, green, no emission. Cooling of the mixture of fluorophores up to ambient T. Excitation by means of UVC and gradual thermal heating from ambient T to T6 and reading of the colours. The following sequence is obtained: white, yellow, red and no emission. The final colour code is the sum of the two: white, sky blue, green, no emission, white, yellow, red and no emission. By inverting the excitation in the UVA with the excitation in the UVC, a new code is obtained: white, yellow, red, no emission, white, sky blue, green and no emission. A further reading sequence is heating of the composition from ambient T to the various quenching points from T1 to T6 and cooling to ambient T under excitation in the ultraviolet spectrum. In this way new codes would be obtained with different colour distributions.

Due to the way the composition has been produced, by exciting first in the UVA and then in the UVC and heating, we obtain the following colour sequence: **white, sky blue, green, no emission, white, yellow, red, no emission.**

### Example 2

The previous example can be repeated using fluorophores that have different quenching temperatures (the quenching temperatures are increasing from T1 to T5):
Fluorophores of type 1 which have marked emission if excited with ultraviolet UVA frequencies.
   - Fluorophore with emission in the visible blue spectrum if excited with UVA and low emission if excited with UVC. Quenching temperature T1.
   - Fluorophore with emission in the visible green spectrum if excited with UVA and low emission if excited with UVC. Quenching temperature T2.
Fluorophores of type 2 which have marked emission if excited with ultraviolet UVC frequencies.
   - Fluorophore with light emission in the visible green spectrum if excited with UVC and low emission if excited with UVA. Quenching temperature T3.
   - Fluorophore with light emission in the visible blue spectrum if excited with UVC and low emission if excited with UVA. Quenching temperature T4.
   - Fluorophore with light emission in the visible red spectrum if excited with UVC and low emission if excited with UVA. Quenching temperature T5.

All the fluorophores of type 1 are mixed together with those of type 2. If we mix the type 1 fluorophores in appropriate ratios, we obtain emission of sky blue light if excited with UVA. If we do the same with the type 2 fluorophores, we obtain emission of white light if excited with UVC. If we excite with UVA and begin to heat, we will obtain **sky blue** at **ambient T,** sky blue minus blue, i.e. **green** at **T1** and **no emission** at **T2.** If we wait for the composition to cool and we excite with UVC and begin to heat, we will observe the following. The composition will emit **white** light if excited at **ambient temperature,** white minus green, i.e. **violet** at **T3,** violet minus blue, i.e. **red** at **T4** and **no emission at T5.** Due to the way the composition has been produced, by exciting first in the UVA and then in the UVC and heating, we obtain the following colour sequence: **sky blue, blue, no emission, white, violet, red, no emission.** As in the previous example, the colour code is a function of the reading sequence.

### Example 3

The previous example can be repeated using fluorophores that have different quenching temperatures (the quenching temperatures are increasing from T1 to T3) and emit in the visible spectrum whether excited with UVA, UVB or UVC:
Fluorophores that have emission if excited with UVA, UVB or UVC frequencies in the ultraviolet spectrum.
- Fluorophore with emission in the visible blue spectrum if excited with UVA, UVB or UVC. Quenching temperature T1.
- Fluorophore with emission in the visible green spectrum if excited with UVA, UVB or UVC. Quenching temperature T2.
- Fluorophore with emission in the visible red spectrum if excited with UVA, UVB or UVC. Quenching temperature T3.

All the fluorophores are mixed together. Emission of white light is obtained if excited with UVA/UVB/UVC. If we excite with UV and begin to heat, we will obtain **white** at **ambient T,** white minus blue, i.e. **yellow** at **T1,** yellow minus green, i.e. **red** at **T2, no emission** at T3. Due to the way the composition is produced, by exciting first in the UV and heating, we obtain the following colour sequence: **white, yellow, red, no emission.** As in the previous example, the colour code is a function of the reading sequence.

### Example 4

Example 2 can be repeated using maximum heating temperature lower than T2 for the type 1 fluorophores and lower than T4 for those of type 2. In this way it can be seen that by varying the maximum heating temperature, a different set of colours is generated:
Type 1 fluorophores that have marked emission if excited with ultraviolet UVA frequencies.
   - Fluorophore with emission in the visible blue spectrum if excited with UVA and low emission if excited with UVC. Quenching temperature T1.
   - Fluorophore with emission in the visible green spectrum if excited with UVA and low emission if excited with UVC. Quenching temperature T2.
Type 2 fluorophores which have marked emission if excited with ultraviolet UVC frequencies.
   - Fluorophore with light emission in the visible green spectrum if excited with UVC and low emission if excited with UVA. Quenching temperature T3.
   - Fluorophore with light emission in the visible blue spectrum if excited with UVC and low emission if excited with UVA. Quenching temperature T4.
   - Fluorophore with light emission in the visible red spectrum if excited with UVC and low emission if excited with UVA. Quenching temperature T5.

All the type 1 fluorophores are mixed together with those of type 2. If we mix the type 1 fluorophores, we obtain sky blue light emission if excited with UVA. If we do the same with the type 2 fluorophores, we obtain white light emission if excited with UVC. If we excite with UVA and begin to heat, we will obtain **sky blue** at **ambient T,** sky blue minus blue, i.e. **green** at **T1.** If we wait for the composition to cool and excite with UVC and begin to heat, we will observe the following. The composition will emit **white** light if excited at **ambient temperature,** white minus green, i.e. **violet** at **T3.** Due to the way the composition is produced, by exciting first in the UVA and the in the UVC and heating, we obtain the following colour sequence: **sky blue, blue, white, violet.** As in the previous example, the colour code is a function of the reading sequence.

The claims of the examples of the preceding points can be made also in combination with fluorophores that emit in the visible spectrum in a selective manner only if excited with UVB.

### Example 5

The following example uses the fluorophores AuSC14H29 and AuMMI cited in the article "Fluorescent thiol-derivatized gold clusters embedded in polymers", G. Carotenuto et al, Advances in Materials Science and Engineering, Volume 2013, Article ID 548284, 6 pages mixed with any other generic commercial fluorophore with blue emission in the visible spectrum, absorption in both the UVA and the UVC and quenching temperature above 130°C.

Fluorophores used.
- Fluorophore AuMMI with emission in the visible green spectrum, absorption peak in the UVA. Quenching temperature T1 of 130°C.
- Fluorophore AuSC14H29 with emission in the visible orange spectrum, absorption peak in the UVC and quenching temperature T2 of 85°C.
- Fluorophore purchased from Tailorlux GmbH art. TL-0003 with emission in the visible blue spectrum, absorption in the UVA, UVB and UVC. Quenching temperature T3 > 130°.

The three fluorophores are mixed together. The mixture generates the emission of sky blue light (green+blue) if excited with UVA, violet light (red+blue) if excited with UVC. If we excite with UVA and begin to heat, we will obtain **sky blue** at **ambient T,** sky blue minus green, i.e. **blue** at **T1.** If we wait for the composition to cool and we excite with UVC and begin to heat, we will observe the following. We will have **violet** emission in the visible spectrum at **ambient T,** violet minus red, i.e. **blue** at **T2.** Arranging the colours read in sequence, we obtain: **sky blue, blue, violet, blue.** As in the previous example, the colour code is a function of the reading sequence.

## Claims

1. A composition comprising at least one first fluorophore, which has a first quenching temperature, and at least one second fluorophore, which has a second quenching temperature that differs from the first quenching temperature by at least 5°C; the first and the second quenching temperatures range from 25°C to 300°C; the first and the second fluorophores being adapted to emit radiations in the visible spectrum at wavelengths that are different from one another.

2. A composition according to claim 1, wherein the first and the second fluorophores being adapted to emit radiations in the visible spectrum (with a wavelength measuring approximately 380-750nm) at wavelengths that are different from one another with a difference of at least 5nm between the peaks of emission.

3. A composition according to claim 1 or 2, wherein at least the first quenching temperature ranges from 0°C to 200°C (in particular, from 0°C to 100°C); the first and the second fluorophores absorbing incident UV radiations (with a wavelength measuring approximately 400-100nm).

4. A composition according to claim 3, wherein the first and the second quenching temperatures are from 25°C to 100°C.

5. A composition according to claim 3 or 4, wherein the first and the second fluorophores absorb incident radiations chosen in the group consisting of: UVA radiations (with a wavelength measuring approximately 400-315nm), UVB radiations (with a wavelength measuring approximately 315-280nm), UVC radiations (with a wavelength measuring approximately 280-100nm).

6. A composition according to any of the preceding claims and comprising at least one third fluorophore, which has a third quenching temperature that differs from the first and the second quenching temperatures by at least 5°C; the first, the second and the third fluorophores being adapted to emit radiations at wavelengths that are different from one another (in particular, with a difference of at least 5nm between the peaks of emission).

7. A composition according to claim 6, wherein the third quenching temperature ranges from 0°C to 300°C (in particular from 0°C to 200°C); the third fluorophore emits radiations in the visible spectrum.

8. A composition according to one of the preceding claims, wherein the phenomenon of quenching of the first and second fluorophore (and if necessary the third fluorophore) is reversible.

9. A composition according to one of the preceding claims, wherein the first and the second fluorophore (and if necessary the third fluorophore) are chosen, each independently of the other, in the group consisting of: AuSC14H29, AuSC14H29/AgTDM, AuMMI .

10. A use of a composition according to one of the preceding claims in order to identify an object, in particular for anti-counterfeiting purposes; the use comprises:
an application step, during which the composition is applied to the object;
an irradiation step, which is at least partially subsequent to the application step and during which the composition is irradiated at least at one wavelength for the absorption of at least the first fluorophore; and
a detection step, during which emissions coming from the composition irradiated according to the irradiation step are detected and the wavelength of said emissions is determined;
the irradiation and detection steps being repeated at a first analysis temperature, which ranges from 0°C to 300°C (in particular from 0°C to 200°C) and is lower than the first quenching temperature, and at least at one second analysis temperature, which ranges from 0°C to 300°C (in particular from 0°C to 200°C) and is higher than the first quenching temperature.

11. A use according to claim 10, wherein the first analysis temperature is at least 25°C (in particular 25°C to 100°C) and is lower than the first quenching temperature, and the second analysis temperature is at least 25°C (in particular, 25°C to 300°C) .

12. A use according to claim 10 or 11, wherein during the irradiation step, the composition is irradiated by means of incident radiations at wavelengths for the absorption of the first and the second (and the third) fluorophore; the incident radiations being chosen in the group consisting of: UVA radiations (400-315nm), UVB radiations (315-280nm), UVC radiations (280-100nm) and a combination thereof;
during the detection step, emissions in the visible spectrum (with a wavelength measuring approximately 380-750nm) are detected;
the use further comprising a comparison step during which the features (in particular the wavelengths) of the emissions detected during the detection step are compared with reference features (in particular wavelengths).

13. A use according to one of the claims from 10 to 12, wherein the irradiation and detection steps are repeated also at least at a third analysis temperature higher than the second quenching temperature; the second analysis temperature being lower than the second quenching temperature.

14. A use according to one of the claims from 10 to 13, wherein the irradiation and detection steps are protracted continuously during the change of the temperature from the first analysis temperature to the second analysis temperature and if necessary from the first to the third analysis temperature;
the use further comprising a comparison step during which the wavelengths of the emissions detected during the detection step at the first and at least at the second analysis temperature are compared with reference wavelengths.

## Patentansprüche

1. Zusammensetzung, die mindestens ein erstes Fluorophor, das eine erste Löschtemperatur aufweist, und mindestens ein zweites Fluorophor, das eine zweite Löschtemperatur aufweist, die sich von der ersten Löschtemperatur um mindestens 5 °C unterscheidet, umfasst; wobei die erste und die zweite Löschtemperatur im Bereich von 25 °C bis 300 °C liegen; wobei das erste und das zweite Fluorophor zum Emittieren von Strahlungen im sichtbaren Spektrum bei Wellenlängen angepasst sind, die sich voneinander unterscheiden.

2. Zusammensetzung nach Anspruch 1, bei der das erste und das zweite Fluorophor zum Emittieren von Strahlungen im sichtbaren Spektrum (mit einer Wellenlänge von etwa 380 bis 750 nm) bei Wellenlängen angepasst sind, die sich mit einer Differenz von mindestens 5 nm zwischen den Emissionspeaks voneinander unterscheiden.

3. Zusammensetzung nach Anspruch 1 oder 2, bei der mindestens die erste Löschtemperatur im Bereich von 0 °C bis 200 °C (insbesondere von 0 °C bis 100 °C) liegt; wobei das erste und das zweite Fluorophor einfallende UV-Strahlungen (mit einer Wellenlänge von etwa 400 bis 100 nm) absorbieren.

4. Zusammensetzung nach Anspruch 3, bei der die erste und die zweite Löschtemperatur von 25 °C bis 100 °C betragen.

5. Zusammensetzung nach Anspruch 3 oder 4, bei der das erste und das zweite Fluorophor einfallende Strahlungen absorbieren, die aus der Gruppe, bestehend aus: UVA-Strahlungen (mit einer Wellenlänge von etwa 400 bis 315 nm), UVB-Strahlungen (mit einer Wellenlänge von etwa 315 bis 280 nm), UVC-Strahlungen (mit einer Wellenlänge von etwa 280 bis 100 nm), ausgewählt sind.

6. Zusammensetzung nach einem der vorhergehenden Ansprüche, die mindestens ein drittes Fluorophor umfasst, das eine dritte Löschtemperatur aufweist, die sich von der ersten und der zweiten Löschtemperatur um mindestens 5 °C unterscheidet; wobei das erste, das zweite und das dritte Fluorophor zum Emittieren von Strahlungen bei Wellenlängen angepasst sind, die sich voneinander unterscheiden (insbesondere mit einer Differenz von mindestens 5 nm zwischen den Emissionspeaks).

7. Zusammensetzung nach Anspruch 6, bei der die dritte Löschtemperatur im Bereich von 0 °C bis 300 °C (insbesondere von 0 °C bis 200 °C) liegt; wobei das dritte Fluorophor Strahlungen im sichtbaren Spektrum emittiert.

8. Zusammensetzung nach einem der vorhergehenden Ansprüche, bei der das Phänomen des Löschens des ersten und des zweiten Fluorophors (und gegebenenfalls des dritten Fluorophors) reversibel ist.

9. Zusammensetzung nach einem der vorhergehenden Ansprüche, wobei das erste und das zweite Fluorophor (und gegebenenfalls das dritte Fluorophor) jeweils unabhängig aus der Gruppe, bestehend aus: AuSC14H29, AuSC14H29/AgTDM, AuMMI, ausgewählt sind.

10. Verwendung einer Zusammensetzung nach einem der vorhergehenden Ansprüche zum Identifizieren eines Gegenstands, insbesondere für Fälschungsverhinderungszwecke; wobei die Verwendung umfasst:
einen Aufbringschritt, während dem die Zusammensetzung auf den Gegenstand aufgebracht wird;
einen Bestrahlungsschritt, der zumindest teilweise nach dem Aufbringschritt durchgeführt wird und während dem die Zusammensetzung mindestens bei einer Wellenlänge für die Absorption mindestens des ersten Fluorophors bestrahlt wird; und
einen Erfassungsschritt, während dem Emissionen, die von der gemäß dem Bestrahlungsschritt bestrahlten Zusammensetzung stammen, erfasst werden und die Wellenlänge der Emissionen bestimmt wird;
wobei die Schritte der Bestrahlung und Erfassung bei einer ersten Analysetemperatur, die im Bereich von 0 °C bis 300 °C (insbesondere von 0 °C bis 200 °C) liegt und niedriger ist als die erste Löschtemperatur, und mindestens einer zweiten Analysetemperatur, die im Bereich von 0 °C bis 300 °C (insbesondere von 0 °C bis 200 °C) liegt und höher ist als die erste Löschtemperatur, wiederholt werden.

11. Verwendung nach Anspruch 10, bei der die erste Analysetemperatur mindestens 25 °C (insbesondere 25 °C bis 100 °C) beträgt und niedriger ist als die erste Löschtemperatur, und die zweite Analysetemperatur mindestens 25 °C (insbesondere 25 °C bis 300 °C) beträgt.

12. Verwendung nach Anspruch 10 oder 11, bei der während des Bestrahlungsschritts die Zusammensetzung mittels einfallender Strahlungen bei Wellenlängen für die Absorption des ersten und des zweiten (und des dritten) Fluorophors bestrahlt wird; wobei die einfallenden Strahlungen aus der Gruppe, bestehend aus: UVA-Strahlungen (400 bis 315 nm), UVB-Strahlungen (315 bis 280 nm), UVC-Strahlungen (280 bis 100 nm) und einer Kombination davon, ausgewählt sind;
wobei während des Erfassungsschritts Emissionen im sichtbaren Spektrum (mit einer Wellenlänge von etwa 380 bis 750 nm) erfasst werden;
wobei die Verwendung ferner einen Vergleichschritt umfasst, während dem die Merkmale (insbesondere die Wellenlängen) der Emissionen, die während des Erfassungsschritts erfasst werden, mit Referenzmerkmalen (insbesondere Wellenlängen) verglichen werden.

13. Verwendung nach einem der Ansprüche 10 bis 12, bei der die Schritte der Bestrahlung und Erfassung auch mindestens bei einer dritten Analysetemperatur wiederholt werden, die höher ist als die zweite Löschtemperatur; wobei die zweite Analysetemperatur niedriger ist als die zweite Löschtemperatur.

14. Verwendung nach einem der Ansprüche 10 bis 13, bei der die Schritte der Bestrahlung und Erfassung während der Änderung der Temperatur von der ersten Analysetemperatur zu der zweiten Analysetemperatur und gegebenenfalls von der ersten bis dritten Analysetemperatur kontinuierlich verlängert werden;
wobei die Verwendung ferner einen Vergleichsschritt umfasst, während dem die Wellenlängen der Emissionen, die während des Erfassungsschritts bei der ersten und mindestens der zweiten Analysetemperatur erfasst werden, mit Referenzwellenlängen verglichen werden.

## Revendications

1. Composition comprenant au moins un premier fluorophore, qui a une première température d'extinction, et au moins un deuxième fluorophore, qui a une deuxième température d'extinction qui diffère de la première température d'extinction d'au moins 5 °C ; la première et la deuxième températures d'extinction vont de 25 °C à 300 °C; le premier et le deuxième fluorophores étant adaptés pour émettre des rayonnements dans le spectre visible à des longueurs d'onde qui sont différentes les unes des autres.

2. Composition selon la revendication 1, dans laquelle le premier et le deuxième fluorophores sont adaptés pour émettre des rayonnements dans le spectre visible (avec une longueur d'onde mesurant approximativement 380 à 750 nm) à des longueurs d'onde qui sont différentes les unes des autres, avec une différence d'au moins 5 nm entre les pics d'émission.

3. Composition selon la revendication 1 ou 2, dans laquelle au moins la première température d'extinction va de 0 °C à 200 °C (en particulier, de 0 °C à 100 °C) ; le premier et le deuxième fluorophores absorbant des rayonnements UV incidentes (avec une longueur d'onde mesurant approximativement 400 à 100 nm).

4. Composition selon la revendication 3, dans laquelle la première et la deuxième températures d'extinction sont de 25 °C à 100 °C.

5. Composition selon la revendication 3 ou 4, dans laquelle le premier et le deuxième fluorophores absorbent des rayonnements incidents choisis dans le groupe constitué par: les rayonnements UVA (avec une longueur d'onde mesurant approximativement 400 à 315 nm), les rayonnements UVB (avec une longueur d'onde mesurant approximativement 315 à 280 nm), les rayonnements UVC (avec une longueur d'onde mesurant approximativement 280 à 100 nm).

6. Composition selon l'une quelconque des revendications précédentes et comprenant au moins un troisième fluorophore, qui a une troisième température d'extinction qui diffère de la première et de la deuxième températures d'extinction d'au moins 5 °C; le premier, le deuxième et le troisième fluorophores étant adaptés pour émettre des rayonnements à des longueurs d'onde qui sont différentes les unes des autres (en particulier, avec une différence d'au moins 5 nm entre les pics d'émission).

7. Composition selon la revendication 6, dans laquelle la troisième température d'extinction va de 0 °C à 300 °C (en particulier de 0 °C à 200 °C); le troisième fluorophore émet des rayonnements dans le spectre visible.

8. Composition selon l'une des revendications précédentes, dans laquelle le phénomène d'extinction des premier et deuxième fluorophores (et si nécessaire du troisième fluorophore) est réversible.

9. Composition selon l'une des revendications précédentes, dans laquelle le premier et le deuxième fluorophores (et si nécessaire le troisième fluorophore) sont choisis, chacun indépendamment de l'autre, dans le groupe constitué par: AuSC14H29, AuSC14H29/AgTDM, AuMMI.

10. Utilisation d'une composition selon l'une des revendications précédentes afin d'identifier un objet, en particulier à des fins anti-contrefaçon ; l'utilisation comprenant :
une étape d'application, pendant laquelle la composition est appliquée sur l'objet ;
une étape d'irradiation, qui est au moins partiellement postérieure à l'étape d'application et pendant laquelle la composition est irradiée au moins à une longueur d'onde pour l'absorption d'au moins le premier fluorophore ; et
une étape de détection, pendant laquelle les émissions provenant de la composition irradiée selon l'étape d'irradiation sont détectées et la longueur d'onde desdites émissions est déterminée ;
les étapes d'irradiation et de détection étant répétées à une première température d'analyse, qui va de 0 °C à 300 °C (en particulier de 0 °C à 200 °C) et est plus basse que la première température d'extinction, et à au moins une deuxième température d'analyse, qui va de 0 °C à 300 °C (en particulier de 0 °C à 200 °C) et est plus élevée que la première température d'extinction.

11. Utilisation selon la revendication 10, dans laquelle la première température d'analyse est d'au moins 25 °C (en particulier 25 °C à 100 °C) et est plus basse que la première température d'extinction, et la deuxième température d'analyse est d'au moins 25 °C (en particulier, 25 °C à 300 °C).

12. Utilisation selon la revendication 10 ou 11, dans laquelle, pendant l'étape d'irradiation, la composition est irradiée au moyen de rayonnements incidentes à des longueurs d'ondes pour l'absorption du premier et du deuxième (et du troisième) fluorophores ; les rayonnements incidentes étant choisies dans le groupe constitué par: les rayonnements UVA (400 à 315 nm), les rayonnements UVB (315 à 280 nm), les rayonnements UVC (280 à 100 nm) et une combinaison de celles-ci ;
pendant l'étape de détection, les émissions dans le spectre visible (avec une longueur d'onde mesurant approximativement 380 à 750 nm) sont détectées ;
l'utilisation comprenant en outre une étape de comparaison pendant laquelle les caractéristiques (en particulier les longueurs d'onde) des émissions détectées pendant l'étape de détection sont comparées avec des caractéristiques de référence (en particulier des longueurs d'onde).

13. Utilisation selon l'une des revendications 10 à 12, dans laquelle les étapes d'irradiation et de détection sont répétées aussi au moins à une troisième température d'analyse plus élevée que la deuxième température d'extinction ; la deuxième température d'analyse étant plus basse que la deuxième température d'extinction.

14. Utilisation selon l'une des revendications 10 à 13, dans laquelle les étapes d'irradiation et de détection sont prolongées continuellement pendant le changement de la température depuis la première température d'analyse à la deuxième température d'analyse et si nécessaire depuis la première à la troisième température d'analyse ;
l'utilisation comprenant en outre une étape de comparaison pendant laquelle les longueurs d'onde des émissions détectées pendant l'étape de détection à la première et au moins à la deuxième température d'analyse sont comparées avec des longueurs d'onde de référence.
